(19) Europäisches Patentamt
European Patent Office
Office européen des brevets

(11) **EP 4 597 819 A1**

(12) **EUROPEAN PATENT APPLICATION**
published in accordance with Art. 153(4) EPC

(43) Date of publication:
**06.08.2025 Bulletin 2025/32**

(21) Application number: **23954582.5**

(22) Date of filing: **06.10.2023**

(51) International Patent Classification (IPC):
**H02M 7/48** (2007.01)     **H02M 1/12** (2006.01)

(52) Cooperative Patent Classification (CPC):
**H02M 1/12; H02M 7/48**

(86) International application number:
**PCT/JP2023/036545**

(87) International publication number:
**WO 2025/074618 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TMEIC Corporation
Tokyo 104-0031 (JP)**

(72) Inventors:
• **WATANABE, Hiroki
  Tokyo 104-0031 (JP)**
• **NAKAMURA, Masashi
  Tokyo 104-0031 (JP)**
• **OKA, Toshiaki
  Tokyo 104-0031 (JP)**

(74) Representative: **Winter, Brandl - Partnerschaft
mbB
Alois-Steinecker-Straße 22
85354 Freising (DE)**

(54) **POWER CONVERSION SYSTEM**

(57)     A power conversion system includes a transformer, a power converter, and a filter circuit. The transformer has a plurality of primary windings and a secondary winding mutually insulated and magnetically coupled, converts alternating current (AC) power to be supplied to each primary winding into polyphase AC power, and supplies the polyphase AC power from the secondary winding to a load. The power converter supplies the AC power to each of the primary windings. The filter circuit is connected to the secondary winding and smooths the polyphase AC power.

FIG. 1A

EP 4 597 819 A1

## Description

TECHNICAL FIELD

An embodiment of the present invention relates to a power conversion system.

BACKGROUND ART

There is a power conversion system that uses a transformer having primary windings of a plurality of branches and a secondary winding of a single branch to integrate alternating current (AC) power generated by a plurality of inverters (power converters) into a single branch and output the integrated AC power. In order to prevent a decrease in the quality of the AC power output by such a power conversion system, a filter is provided between the output of each inverter and the transformer. When the number of inverters is increased to increase the scale of the power conversion system, the scale of this filter portion increases and hence it may be difficult to configure the power conversion system. Even in such cases, there is a demand for further improving the quality of the AC power output by the power conversion system.

Citation List

Patent Document

Patent Document 1: Japanese Unexamined Patent Application, First Publication No. 2015-133856

SUMMARY OF INVENTION

Technical Problem

An objective of the present invention is to provide a power conversion system capable of further improving the quality of AC power to be output.

Solution to Problem

According to an embodiment, a power conversion system includes a transformer, a power converter, and a filter circuit. The transformer has a plurality of primary windings and a secondary winding mutually insulated and magnetically coupled, converts alternating current (AC) power to be supplied to each primary winding into polyphase AC power, and supplies the polyphase AC power from the secondary winding to a load. The power converter supplies the AC power to each of the primary windings. The filter circuit is connected to the secondary winding and smooths the polyphase AC power.

BRIEF DESCRIPTION OF DRAWINGS

[FIG. 1A] A schematic configuration diagram of a power conversion system of an embodiment.
[FIG. 1B] A schematic configuration diagram of a power conversion system of a comparative example.
[FIG. 2A] An explanatory diagram of a filter according to the embodiment.
[FIG. 2B] An explanatory diagram of the filter according to the embodiment.
[FIG. 3] An explanatory diagram of an example of frequency characteristics of an equivalent circuit of a transformer 2 and a filter 5 according to the embodiment.
[FIG. 4A] A circuit diagram of a power conversion system 1 to which the filter 5 is applied according to the embodiment.
[FIG. 4B] A circuit diagram of the power conversion system 1 to which the filter 5 is applied according to the embodiment.
[FIG. 5] An explanatory diagram of a winding configuration of a transformer according to the embodiment.

DESCRIPTION OF EMBODIMENTS

Hereinafter, a power conversion system of an embodiment will be described with reference to the drawings.
In addition, in the following description, constituent elements having the same or similar functions are denoted by the same reference signs. Also, redundant description of those constituent elements may be omitted. In addition, an electrical connection may simply be referred to as a "connection."

(Embodiment)

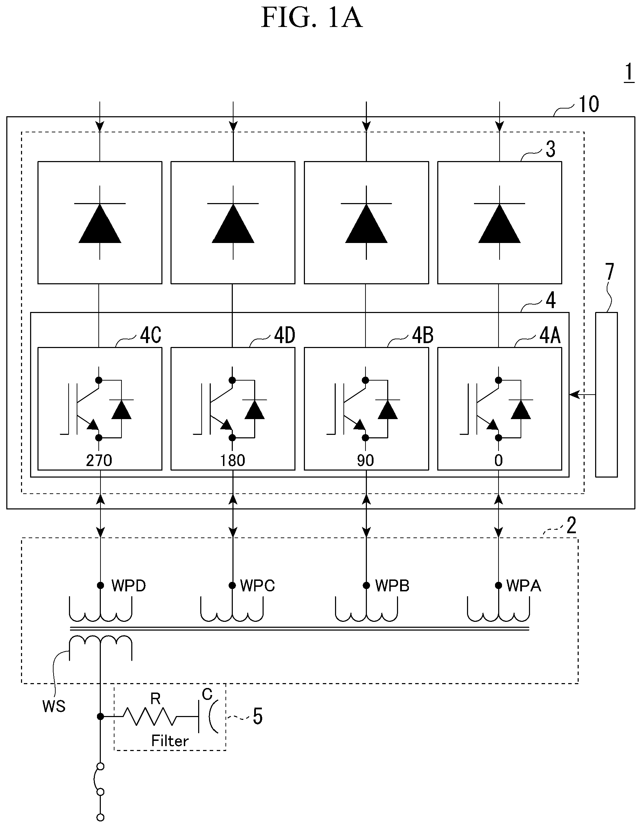

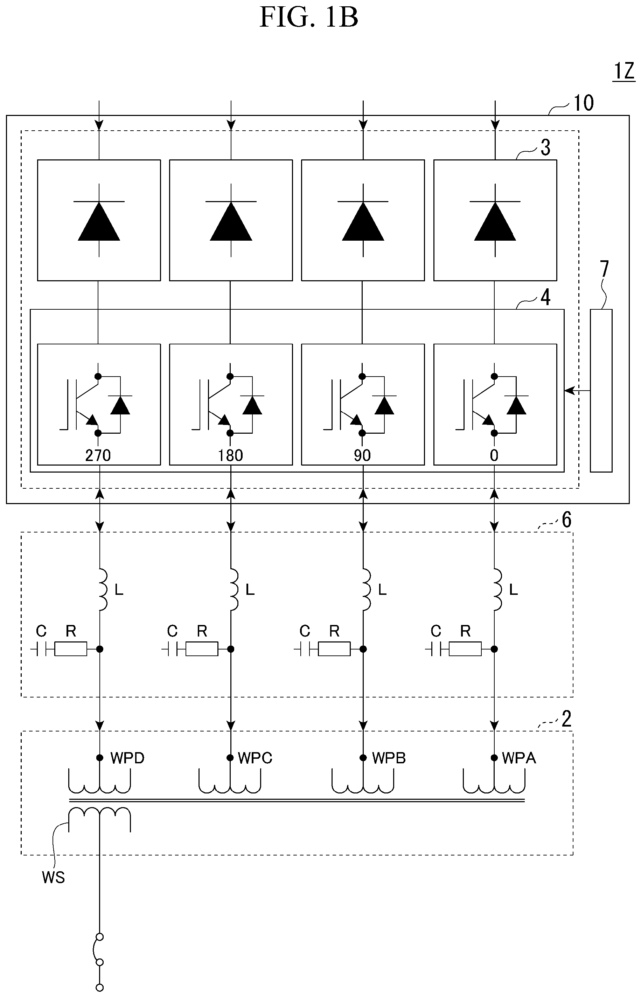

A four-bank power conversion system will be described with reference to FIGS. 1A and 1B.
FIG. 1A is a schematic configuration diagram of a power conversion system 1 of an embodiment.
FIG. 1B is a schematic configuration diagram of a power conversion system 1Z of a comparative example.
The power conversion system 1 of the embodiment will be described with reference to differences from the power conversion system 1Z of the comparative example.
Both the power conversion system 1 and the power conversion system 1Z are configured to output AC power of at least one branch from a transformer. A difference between the power conversion system 1 and the power conversion system 1Z is a peripheral circuit of the transformer.
For example, the power conversion system 1 includes a transformer 2, a rectifier 3, an inverter 4, a filter 5, and a control unit 7.
In contrast, the power conversion system 1Z includes a filter 6 in place of the filter 5 of the power conversion system 1. The differences will be described below in order.

The transformer 2 is a three-phase AC transformer having primary windings of a plurality of branches and a secondary winding of a single branch. The transformer 2 is configured, for example, as a multi-winding type transformer.

Each branch on the primary side of the transformer 2 has a three-phase AC winding. The number of branches on the primary side of the transformer 2 is two or more. The number of branches on the primary side of the transformer 2 can be expressed as (2N). In addition, N is a natural number. In the following description, an example in which (2N) is 4 is shown.

A bank configuration shown in FIGS. 1A and 1B has four banks and the number of branches on the primary side of the transformer 2 is four. The four windings WPA, WPB, WPC, and WPD shown in the drawing are an example of a primary winding for a W-phase of three-phase AC in the transformer 2 whose primary winding has a Y-connection.

The description of the number of banks is similar hereinafter.

The branch of the secondary side of the transformer 2 has a three-phase AC winding.

The transformer 2 is, for example, a step-up type transformer with a transformation ratio a. When the transformer 2 is of a step-up type, an electric current flowing through the secondary winding is less than an electric current flowing through the primary winding. Because heat generation due to copper loss in the secondary winding is reduced, a cross-sectional area of the secondary winding may be appropriately reduced accordingly. A more detailed configuration of the transformer 2 will be described below.

Although an example in which the primary winding of the transformer 2 in the above-described first example has a Y-connection and the secondary winding S has a Δ-connection will be described below, the present invention is not limited thereto and connection configurations of the primary winding and the secondary winding S may be changed as appropriate.

The rectifier 3 is configured to include, for example, a smoothing capacitor, and rectifies AC power and outputs DC power smoothed by a smoothing capacitor. The rectifier 3 may be configured to be divided into a plurality of branches. For example, the number of branches of the rectifier 3 is set to (2N) in accordance with the above.

The inverter 4 is provided on a load side of the rectifier 3. The inverter 4 has a semiconductor switching element and generates AC power on the basis of DC power according to a switching operation thereof. The inverter 4 may be configured to be divided into a plurality of branches. The number of branches of the inverter 4 is set to (2N) in accordance with the above.

The four three-phase inverters 4A, 4B, 4C, and 4D shown in FIGS. 1A and 1B are examples of three-phase AC inverters. For example, the three-phase inverters 4A, 4B, 4C, and 4D supply power to each primary winding of a U-phase and each primary winding of a V-phase in addition to each primary winding of a W-phase.

The control unit 7 switches each semiconductor switching element of the inverter 4 to output AC power from the inverter 4 to the transformer 2.

The rectifier 3, the inverter 4, and the control unit 7 described above are an example of a power conversion device 10.

The filter 5 of the embodiment includes a passive element and is connected between lines on the secondary side of the transformer 2. The filter 5 becomes a capacitive load on the secondary winding of the transformer 2. This filter 5 includes a circuit that exhibits a capacitive load characteristic. The filter 5 is configured to transmit a fundamental wave component of the polyphase AC power output from the secondary side of the transformer 2 by the inductive component of the transformer 2 and the capacitive component of the capacitive load characteristics and to attenuate a normal-mode noise component generated according to a switching operation of the semiconductor element of the inverter 4 (the power converter).

The filter 5 includes, for example, a capacitor 5A. In this configuration, the capacitance of the capacitor 5A may be used as a capacitive component of a circuit that exhibits the capacitive load characteristic of the filter 5.

The filter 5 includes, for example, a set (5A) of a resistor and a capacitor connected in series.

In addition, the filter 5 may be provided between the secondary winding of the transformer 2 and a power distribution switch for disconnecting a load and a connection cable.

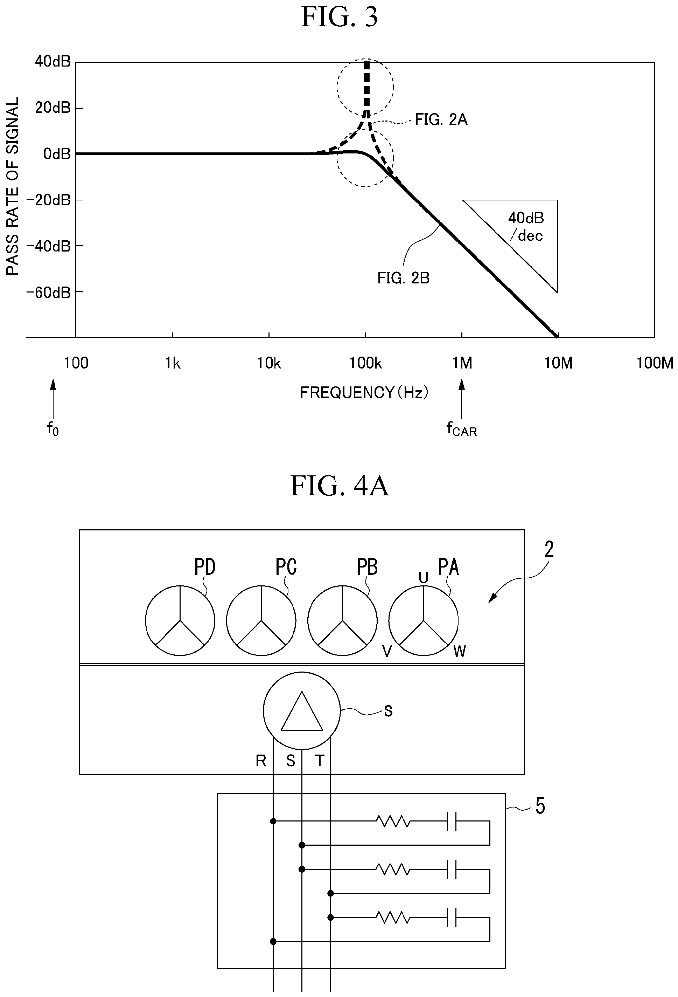

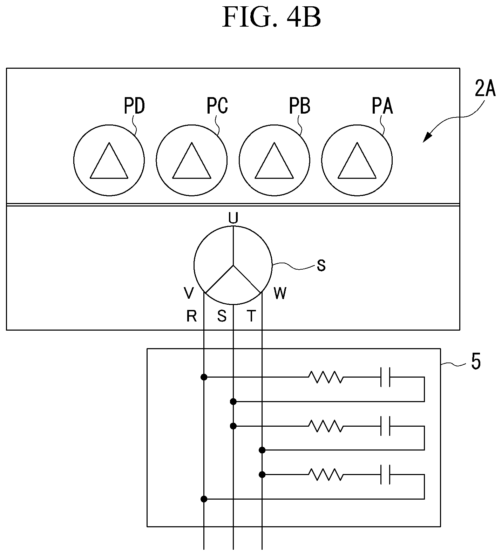

FIGS. 4A and 4B show an example of a specific circuit to which the filter 5 is applied according to the embodiment.

FIGS. 4A and 4B are circuit diagrams of the power conversion system 1 to which the filter 5 is applied according to the embodiment.

Four primary windings PA, PB, PC, and PD of the transformer 2 shown in FIGS. 4A and 4B are connected in a Y-connection.

The primary winding of the transformer 2 shown in FIG. 4A is configured in a Y-connection and the secondary winding is configured in a Δ-connection. The filter 5B (5) is configured in a Δ-connection. By making the connection as described above, the Δ-connection of the secondary winding of the transformer 2 and the Δ-connection of the filter 5 are connected in parallel.

Moreover, the primary winding of the transformer 2A shown in FIG. 4B is configured in the Δ-connection and the secondary winding is configured in the Y-connection. The filter 5B (5) is similarly configured in the Δ-connection. By making the connection as described above, the elements of the filter 5 are connected between the lines of the secondary winding of the transformer 2.

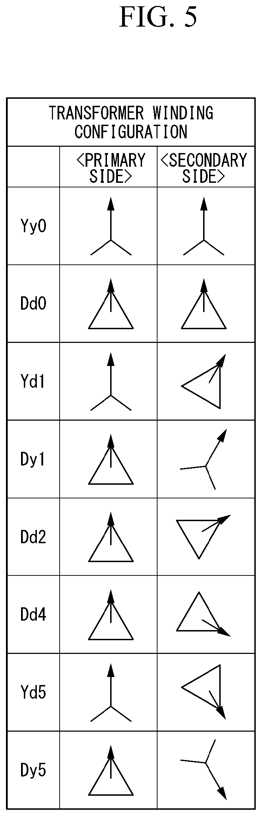

In addition, the winding configuration of the transformers 2 and 2A described above is merely an example and the present invention is not limited thereto. For example, the primary winding of the transformer 2 shown in FIG. 4A may be configured as the Δ-connection and the primary winding of the transformer 2A shown in FIG. 4B may be configured as the Y-connection. For example, a transformer with a winding configuration as shown in FIG. 5 may be used. FIG. 5 is an explanatory diagram of an example of a winding configuration of a transformer.

In the case of the filter 5, only a capacitor C or a set of a resistor R and a capacitor C is provided between the lines on the secondary side. In this case, three capacitors C are required. Three resistors may be provided as necessary.

In addition, the filter 6 of the comparative example shown in FIG. 1B includes a reactor L, a resistor R, and a capacitor C. The reactor L of the filter 6 is provided on a conductor that connects the output of the inverter 4 and each winding on the primary side of the transformer 2. A resistor R and a capacitor C are provided between the transformer 2 side of a reactor L and a neutral point. Such a filter 6 has a Y-connection. In the case of the filter 6, it is necessary to provide a set of a reactor L, a resistor R, and a capacitor C for each phase of each bank. In the case of a three-phase circuit with four banks, 12 sets each having a reactor L, a resistor R, and a capacitor C are required.

As described above, the filter 5 of the embodiment is different from the filter 6 of the comparative example in both the configuration and the number of circuits. Because the filter 6 of the comparative example individually processes the AC power generated by each inverter, four branches equal in number to four banks are required in the case of a configuration of the four banks. According to a configuration using the filter 5 of the embodiment, the number of constituent parts can be reduced as described above.

In addition, when the secondary winding of the transformer 2 has the Δ-connection as shown in FIG. 1, the element of the filter 5 and the secondary winding of the transformer are connected in parallel to each other.

Moreover, an electric current flowing from the inverter 4 to the filter 6 includes an electric current based on the AC power generated by each inverter and an electric current of a noise component. The presence of the filter 6 attenuates the noise component. If the filter 6 is removed, the noise component flows into the transformer 2 without being attenuated as described above. In other words, the normal-mode noise component generated according to a switching operation of the semiconductor element of the inverter 4 is supplied to the primary winding of the transformer 2. This noise component is generated, for example, in synchronization with a switching timing of each inverter.

Therefore, in the configuration of the embodiment, the transformer 2 is combined with the filter 5.

Thereby, it is possible to use the frequency characteristic of the magnetic permeability of the core of the transformer 2 to attenuate the noise components. In addition, the frequency characteristics due to the inductive component of the transformer 2 and the capacitive component of the capacitive load characteristic of the filter 5 can be used to attenuate the noise component. These noise components are manifested as normal-mode noise. By attenuating the noise components, the quality of the AC power to be output can be further improved.

The power conversion system 1 configured as described above uses, for example, a multi-winding transformer 2 having primary windings of a plurality of branches and a secondary winding of a single branch, to integrate AC power generated by a plurality of inverters into the single branch and output the integrated AC power.

From another point of view, the power conversion system 1 includes a transformer 2, an inverter 4A (a first power converter), an inverter 4B (a second power converter), and a filter 5 (a filter circuit).

The transformer 2 has first to fourth primary windings (for example, W-phase primary windings WPA, WPB, WPC, and WPD) and a secondary winding S, which are mutually insulated and magnetically coupled. The filter 5 is connected to the secondary winding S.

The inverter 4A is connected to the primary winding WPA (the first primary winding) and supplies first AC power to the primary winding WPA. The inverter 4B is connected to the primary winding WPB (the second primary winding) and supplies second AC power to the primary winding WPB. The inverter 4C is connected to the primary winding WPC (the third primary winding) and supplies third AC power to the primary winding WPC. The inverter 4D is connected to the primary winding WPD (the fourth primary winding) and supplies fourth AC power to the primary winding WPD.

This transformer 2 converts the AC power to be supplied to each primary winding into polyphase AC power, and supplies the polyphase AC power to the load from its secondary winding S.

Meanwhile, when the inverter 4 is operated by general PWM control, electric currents of the following frequency components are generated during the operation.

　　a. Electric current component of fundamental frequency of AC
　　b. Electric current component of harmonic frequency of fundamental frequency of AC
　　c. Electric current components of carrier frequency of PWM control and frequency related to PWM control

In addition, a carrier frequency of PWM control is a frequency of a carrier signal of PWM control.

Among the above-described electric current components, the electric current components related to b and c include frequency components that are essentially unnecessary. Methods for reducing levels of such unnecessary frequency components will be described in order.

First, a first method for reducing the levels of unnecessary frequency components will be described.

When switching timings of semiconductor switching elements of a plurality of inverters 4 are the same, a level of an unnecessary frequency component increases in synchronization with the timing. For example, the control unit 7 of the power conversion system 1 performs PWM control of a carrier phase shift modulation scheme so that a harmonic current of the fundamental frequency of AC is suppressed. When the carrier phase shift modulation scheme is applied, the phase of the carrier used by each inverter for PWM control is shifted by 360/N degrees, thereby making it possible to suppress some of the unnecessary current components among the electric current components listed below. For example, N is the number of inverters. In this power conversion system 1, N is 4.

This carrier phase shift modulation scheme suppresses the level of the electric current component of the above-described b occurring in synchronization with the switching timing. However, even if the carrier phase shift modulation scheme is used, because the electric current component of the above-described c is not suppressed, it may remain as a harmonic current. In the present embodiment, the filter 5 is used to reduce noise of the harmonic current or the like, thereby smoothing the above-described polyphase AC power.

In this way, the filter 5 of the embodiment does not individually process the AC power generated by each inverter, but performs a process of filtering the polyphase AC power that is integrated into a single branch and output. The filter 5 attenuates a noise component superimposed on an electric current based on the polyphase AC power, which is integrated into a single branch and output by the transformer 2, from the electric current.

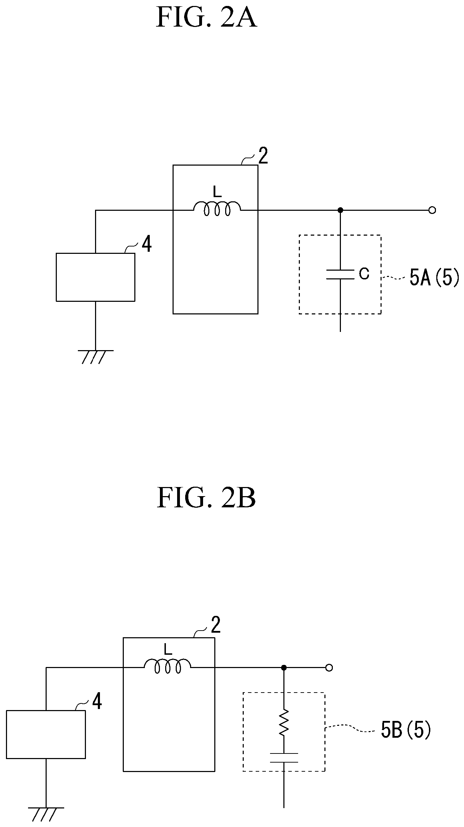

Next, a specific example of the filter 5 will be described with reference to FIGS. 2A and 2B.

FIGS. 2A and 2B are explanatory diagrams of the filter 5 of the embodiment.

The filter 5A shown in FIG. 2A includes a capacitor.

The filter 5B shown in FIG. 2B includes a capacitor and a resistor. This resistor is a so-called damping resistor.

The transformer 2 is an insulation type transformer in which a primary winding and a secondary winding are separated. The transformer 2 is modeled as a single-phase circuit and a winding and a magnetic circuit of the transformer 2 are equivalent to inductance L.

With this modeling, the equivalent circuit of the transformer 2 and the filter 5 can be converted as shown in FIG. 2A or 2B.

FIG. 3 is an explanatory diagram of an example of a frequency characteristic of the equivalent circuit of the transformer 2 and the filter 5 of the embodiment.

A resonant frequency of the inductance L and the capacitor C is calculated by the following Eq. (1).

$$f_c = 1/(2\pi\sqrt{(LC)}) \quad (1)$$

The equivalent circuit of the transformer 2 and the filter 5 functions as a second-order low-pass filter. For example, it is assumed that the resonant frequency of the inductance L and the capacitor C in the equivalent circuit of the transformer 2 and the filter 5 is 100 kHz.

According to this equivalent circuit, an attenuation characteristic of a gradient of 40 dB/dec above this frequency is shown. The higher the frequency, the greater the amount of attenuation.

For example, if the carrier frequency $f_{car}$ of the inverter 4 is 1 MHz, because the amount of attenuation of the carrier frequency $f_{car}$ is attenuated to -40 dB with respect to 0 dB in a low range, it can be seen that the component of the carrier frequency $f_{car}$ can be sufficiently attenuated.

In addition, if necessary, it is only necessary to use a circuit (FIG. 2B) with a damping resistor R. Because the frequency characteristic of the filter 5A shown in FIG. 2A has a resonance point, a component of the frequency near the resonance point may be amplified. It is only necessary to provide a damping resistor and adjust the frequency characteristic to the desired one so that this component is not amplified.

According to at least one embodiment described above, a power conversion system includes a transformer, a power converter, and a filter circuit. The transformer has a plurality of primary windings and a secondary winding mutually insulated and magnetically coupled, converts AC power to be supplied to each primary winding into polyphase AC power, and supplies the polyphase AC power from the secondary winding to a load. The power converter supplies the AC power to each of the primary windings. The filter circuit is connected to the secondary winding and smooths the polyphase AC power, thereby improving the quality of the AC power to be output.

Some or all of the functional units of the control unit 7 in the power conversion system 1 of the embodiment described above, for example, may have a software functional unit implemented by a processor (a hardware processor) of a computer executing a program (a computer program or a software component) stored in a storage unit (a memory or the like) of the computer. In addition, some or all of the functional units of the control unit 7 may be implemented by hardware such as a large-scale integration (LSI) circuit, an application-specific integrated circuit (ASIC), or a field-programmable gate array (FPGA) or may be implemented by a combination of a software functional unit and hardware.

While some embodiments of the present invention have been described, these embodiments are presented as examples and do not intend to limit the scope of the invention. These embodiments can be implemented in other various forms, and various abbreviations, exchanges, and changes can be made without deviating from the spirit of the invention. For example, the configurations of the respective embodiments may be implemented in combination with each other and can be applied to the constituent part without description. These embodiments and their modifications are included in the scope and spirit of the invention and are also included in the inventions described in claims and equivalents thereof.

In the above-described embodiment, the above-described PWM control may be individually performed for each bank of inverters 4. Alternatively, the above-described PWM control may be performed for each set of inverters 4, thereby reducing the processing load of the PWM control by half.

For example, the configuration of the inverter 4 is not limited and may be either a half-bridge type or a full-bridge type. Each inverter (4A, 4B, 4C, or 4D) may be a 180-degree conduction type or a 120-degree conduction type. There is no limitation on a voltage waveform (electric current waveform) formed by a combination of outputs of the respective inverters and a desired waveform can be selected. For example, an example in which the number of voltage pulses (electric current pulses) output by each inverter in one cycle of PWM control is one is shown, but the present invention is not limited thereto and a configuration in which a plurality of pulses are output in one cycle may be adopted. Moreover, for example, a secondary voltage waveform (electric current waveform) synthesized from the output of each inverter may be of a multi-level type.

REFERENCE SIGNS LIST

    1 Power conversion system
    2 Transformer
    3 Rectifier
    4 Inverter
    5 Filter
    7 Control unit
    10 Power conversion device

**Claims**

1. A power conversion system comprising:

    a transformer having a plurality of primary windings and a secondary winding mutually insulated and magnetically coupled and configured to convert alternating current (AC) power to be supplied to each primary winding into polyphase AC power and supply the polyphase AC power from the secondary winding to a load;
    a power converter configured to supply the AC power to each of the primary windings; and
    a filter circuit connected to the secondary winding and configured to smooth the polyphase AC power.

2. The power conversion system according to claim 1, wherein the filter circuit includes a passive element and serves as a capacitive load for the secondary winding.

3. The power conversion system according to claim 1, wherein the filter circuit includes a circuit exhibiting a capacitive load characteristic, transmits a fundamental wave component of the polyphase AC power by means of an inductive component of the transformer and a capacitive component of the capacitive load characteristic, and attenuates a normal-mode noise component generated according to a switching operation of a semiconductor element of the power converter.

4. The power conversion system according to claim 3, wherein the filter circuit includes a capacitor and uses capacitance of the capacitor as the capacitive component of the circuit exhibiting the capacitive load characteristic.

5. The power conversion system according to claim 3, wherein the filter circuit is configured in a Δ-connection.

6. The power conversion system according to claim 3, wherein the power converter

    supplies the normal-mode noise component generated according to the switching operation of the semiconductor element of each power converter to the primary winding of the transformer, and
    uses a frequency characteristic of magnetic permeability of a core of the transformer and a frequency characteristic due to the inductive component of the transformer and the capacitive component of the capacitive load characteristic to attenuate the normal-mode noise component by combining the transformer and the filter circuit.

7. The power conversion system according to claim 1, wherein the filter circuit is provided between the secondary winding of the transformer and a distribution switch.

8. A power conversion system comprising:

a transformer having first and second primary windings and a secondary winding mutually insulated and magnetically coupled and configured to convert AC power to be supplied to the first and second primary windings into polyphase AC power and supply the polyphase AC power from the secondary winding to a load;

a first power converter connected to the first primary winding and configured to supply first AC power to the first primary winding;

a second power converter connected to the second primary winding and configured to supply second AC power to the second primary winding; and

a filter circuit connected to the secondary winding and configured to smooth the polyphase AC power.

# FIG. 1A

# FIG. 1B

# FIG. 2A

# FIG. 2B

# FIG. 3

# FIG. 4A

# FIG. 4B

# FIG. 5

| TRANSFORMER WINDING CONFIGURATION | | |
|---|---|---|
| | \<PRIMARY SIDE\> | \<SECONDARY SIDE\> |
| Yy0 | | |
| Dd0 | | |
| Yd1 | | |
| Dy1 | | |
| Dd2 | | |
| Dd4 | | |
| Yd5 | | |
| Dy5 | | |

## INTERNATIONAL SEARCH REPORT

| International application No. |
|---|
| **PCT/JP2023/036545** |

| A. | CLASSIFICATION OF SUBJECT MATTER |
|---|---|

*H02M 7/48*(2007.01)i; *H02M 1/12*(2006.01)i
FI: H02M7/48 T; H02M1/12

According to International Patent Classification (IPC) or to both national classification and IPC

| B. | FIELDS SEARCHED |
|---|---|

Minimum documentation searched (classification system followed by classification symbols)

H02M7/48; H02M1/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 57-20173 A (MITSUBISHI ELECTRIC CORPORATION) 02 February 1982 (1982-02-02) p. 1, left column, line 16 to right column, line 18, fig. 1-3 | 1-8 |
| X | JP 1-136569 A (KABUSHIKI KAISHA TOSHIBA) 29 May 1989 (1989-05-29) p. 2, upper left column, line 17 to upper right column, line 10, fig. 2 | 1, 8 |
| Y | | 2-7 |
| Y | JP 2003-189474 A (FUJI ELECTRIC CO., LTD.) 04 July 2003 (2003-07-04) paragraphs [0002]-[0004], fig. 5 | 2-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **12 December 2023** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/036545**

| Patent document cited in search report | | | Publication date (day/month/year) | Patent family member(s) | Publication date (day/month/year) |
|---|---|---|---|---|---|
| JP | 57-20173 | A | 02 February 1982 | (Family: none) | |
| JP | 1-136569 | A | 29 May 1989 | (Family: none) | |
| JP | 2003-189474 | A | 04 July 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015133856 A